# EUROPÄISCHE PATENTANMELDUNG

(11) **EP 1 256 793 A1**
(43) Veröffentlichungstag der Anmeldung: **13.11.2002**
(21) Anmeldenummer: 01111522.7
(22) Anmeldetag: 11.05.2001
(51) Int. Cl.: G01N 21/15, G01N 21/85

(54) **Vorrichtung zur optischen Messung in einem Medium**

(71) Anmelder: WTW Wissenschaftlich-Technische Werkstätten GmbH & Co. KG, 82362 Weilheim (DE)
(72) Erfinder: Rettig, Ulrich, 82407 Wielenbach (DE); Schuhmacher, Rudolf, 82380 Peissenberg (DE); Essel, Raimund, 82362 Weilheim (DE); Probst, Markus, 82380 Peissenberg (DE); Mues, Andreas, Dr., 24109 Melsdorf (DE)
(74) Vertreter: Zipse + Habersack

(57) **Zusammenfassung**

Die Erfindung betrifft eine Vorrichtung zur optischen Messung, insbesondere Trübungsmessung, in einem Medium, umfassend
- ein Gehäuse (12), insbesondere aus Metall,
- mindestens einen im Gehäuse (12) angeordneten Sensor (38) mit wenigstens einer Strahlungsquelle, die wenigstens einen optischen Strahl (26) in das zu untersuchende Medium abstrahlt , und mit wenigstens einem Detektor, der Streustrahlung (28) oder Reflektionen des Strahls in dem Medium empfängt,
- wenigstens ein optisch durchlässiges Element (18) in einer Gehäusewand zum Strahlaus/eintritt aus dem / in das Gehäuse, und
- wenigstens einen Schwingungserzeuger (22), der zumindest mit dem optisch durchlässigen Element (18) mechanisch gekoppelt ist,
wobei
a) der Schwingungserzeuger (22) zwischen dem Sensor (38) und dem optisch durchlässigen Element (18) angeordnet ist, und
b1) der Schwingungserzeuger (22) wenigstens eine Aussparung oder Durchführung(24a,b) zum Strahldurchtritt enthält und/oder
b2) der Strahl (26,28) zwischen Teilen des Schwingungserzeugers oder mehreren Schwingungserzeugern hindurch in das / aus dem Gehäuse (12) geführt ist. Auf diese Weise wird eine kompakte betriebssichere optische Messvorrichtung auch zur Messung in stark verschmutzten Medien geschaffen.

## Beschreibung

Die Erfindung betrifft eine Vorrichtung für die optische Messung, z.B. Trübungsmessung bzw. Feststoffmessung und photometrische Messung in Medien, insbesondere Flüssigkeiten, wie z.B. Wasser und Abwasser. Da derartige Messungen sehr oft in stark verschmutzten Gewässern durchgeführt werden, besteht ein Problem in der Reinigung und Sauberhaltung der Messgeräte. Denn sich absetzender Schmutz am Messfenster führt zur Beeinträchtigung der Messwerte. Vor allem bei Langzeitmessungen kann eine Verschmutzung des Messfensters dazu führen, dass die gemessenen Werte immer mehr von den tatsächlichen Verhältnissen abweichen. Dies wird zum einen durch biologisches Wachstum, d.h. die Erzeugung von Biofilmen an dem Messfenster verursacht als auch durch physikalische Effekte, wie z.B. Sedimentation und Adhäsion am Fenster.

Bekannte Reinigungsverfahren arbeiten unter Anwendung von Wischern, die das Messfenster überstreichen. Dies hat jedoch den Nachteil, dass sich auf dem Messfenster Schlieren bilden und sich Schmutz am Wischer fest hängt. Zudem ist eine Messung während der Reinigung nicht möglich, was Langzeitmessungen ungünstig beeinflusst.

Ein anderes Verfahren verwendet einen Wasserstrahl zum Sauberspritzen des Messfensters. Jedoch kann hiermit der Bewuchs des Messfensters nicht vollständig verhindert werden. Zudem kann sich Schmutz an hervorstehenden Einrichtungen wie z.B. Düsen und tragenden Elementen festsetzen. Vor allem wird durch das Messmedium sauberes Wasser in das Messmedium eingetragen, was wiederum die Messwerte direkt beeinflusst.

Es ist weiterhin allgemein bekannt, für die Reinigung von Objekten Ultraschall einzusetzen. So zeigt z.B. die US 4,441,796 eine Filmtransportanordnung, bei der eine im optischen Strahlengang befindliche Linse durch eine Vibrationseinrichtung in Schwingungen im Ultraschallbereich versetzt wird, um Schmutz von der Linse zu entfernen. Die gezeigte Anordnung ist jedoch viel zu voluminös und zu ineffektiv, um eine wirkungsvolle Reinigung für andere Zwecke zu bewirken.

Es ist daher Aufgabe der Erfindung, eine Vorrichtung der eingangs genannten Art zu schaffen, die eine unverfälschte optische Messung ohne Zusetzen des Messfensters erlaubt.

Diese Aufgabe wird gelöst durch eine Vorrichtung bzw. Anordnung gemäß Anspruch 1. Vorteilhafte Weiterbildungen der Erfindung sind Gegenstand der Unteransprüche.

Erfindungsgemäß weist die Vorrichtung ein insbesondere wasserdichtes Gehäuse auf, das z.B. aus einem zylindrischen Becher gebildet ist. Im Bereich einer Gehäuseaußenseite, z.B. Stirnseite, ist ein optisch durchlässiges Element, kurz: Messfenster vorgesehen, um den Strahlengang eines Sensors aus dem Gehäuse heraus- bzw. in das Gehäuse eintreten zu lassen. Der Schwingungserzeuger ist zwischen dem Sensor und dem Messfenster angeordnet. Er enthält wenigstens eine Aussparung oder Durchführung für den Strahldurchtritt. Alternativ hierzu kann der Schwingungserzeuger auch durch mehrere Teile gebildet sein, zwischen denen hindurch der ein- bzw. austretende Strahl des Sensors geführt ist/sind.

Dieser erfindungsgemäße Aufbau erlaubt eine sehr kompakte und dichte Bauweise der Messvorrichtung, die zur on-site Messung geeignet ist. Durch die Anordnung des Schwingungserzeugers zwischen dem Sensor und dem Messfenster ist es möglich, den Schwingungserzeuger mit dem Messfenster zu einem kompakten Block zu verbinden, ohne den Schwingungserzeuger in dem zu untersuchenden Fluid zu exponieren. Auf der anderen Seite kann durch diese Anordnung der Sensor von dem Messfenster beabstandet und somit akustisch gegenüber dem Schwingungsblock aus Schwingungserzeuger und Messfenster gedämpft sein. Die Dämpfung kann bewirkt werden durch eine Verringerung der Wandstärke des Gehäuses und/oder durch die Anordnung von Dämpfungsmaterial zwischen dem Schwingungserzeuger und dem Sensor. Durch das Vorsehen entsprechender fluchtender Aussparungen in dem Dichtungsmaterial und dem Schwingungserzeuger ist es möglich, die Mess-Strahlen in gewünschter Weise zu führen, ohne dass die gesamte Bauform zu aufwendig wird. Die erfindungsgemäße Anordnung ermöglicht somit die wirkungsvolle mechanische Kopplung eines sehr kräftigen Schwingungserzeugers, vorzugsweise einer piezokeramischen Scheibe mit dem Messfenster und auf der anderen Seite eine gute mechanische Entkopplung der gesamten schwingenden Komponenten von dem Sensor. Dies führt zu einer äußerst zuverlässigen Betriebsweise, die eine wirkungsvolle Reinhaltung des Messfensters auch während der Messung ohne Beeinträchtigung der Messtätigkeit des Sensors ermöglicht. Neben der kompakten Bauweise wird somit eine äußerst hohe Betriebssicherheit durch die erfindungsgemäße Anordnung gewährleistet.

Wenn das Gehäuse in vorteilhafter Weise als zylinder- oder becherförmiges Element ausgebildet ist, ist das Messfenster vorzugsweise als stirnseitige Scheibe ausgebildet. Die Scheibe kann an einer Einfassung des Gehäuses und/oder an einem Zwischenboden des Gehäuses befestigt sein, mit welchem dann auch der Schwingungserzeuger mechanisch fest bzw. starr gekoppelt ist. Es ist auch möglich, den Schwingungserzeuger fest mit dem Gehäuse zu verbinden und an dem Schwingungserzeuger das Messfenster zu befestigen. In jedem Fall muss ein dichtender Abschluss zwischen dem Messfenster und dem Gehäuse sichergestellt sein. Der Schwingungserzeuger arbeitet vorzugsweise im Ultraschallbereich, d.h. zwischen 2 und 100 kHz. vorzugsweise ist der Schwingungserzeuger in einem vom Sensor abgeschirmten Faradayschen Käfig angeordnet. Der Käfig kann gebildet sein durch die Gehäusewandungen und Zwischenböden und/oder lediglich durch die Gehäusewandungen und Kontaktflächen des Schwingungserzeugers oder des Sensors, die sich dann jedoch flächig über eine Stirnseite erstrecken sollten. Auf diese Weise wird das Einwirken von Störstrahlung in die Elektronik des Sensors vermieden, was wiederum die Auflösung, Betriebssicherheit und Genauigkeit der Messanordnung erhöht.

Vorzugsweise ist zwischen dem Schwingungserzeuger und dem optisch durchlässigen Element eine Gehäusemembran ausgebildet, an welcher sowohl der Schwingungserzeuger als auch das optisch durchlässige Element festgelegt werden. Die Befestigung der beiden Komponenten an der Membran des Gehäuses ist unter verbindungstechnischen Gesichtspunkten vorteilhaft, da beide Komponenten eine unterschiedliche Festlegung an dem Gehäuse erfordern. So wird der Schwingungserzeuger vorzugsweise flächig und elektrisch leitend mit der Membran verklebt. Das optisch durchlässige Element, d.h. Messfenster kann formschlüssig an seinem Umfang vom Gehäuse umgriffen werden und/oder vorzugsweise ebenfalls flächig mit der Membran verklebt sein. Durch den festen mechanischen Verbund Schwingungserzeuger/Membran/Messfenster wird somit eine vom restlichen Gehäuse leichter entkoppelbare (Dämpfung, Wandstärkenreduktion) aber sehr effektive Schwingungseinheit bereitgestellt, die eine Verschmutzung des Messfensters wirksam unterbindet, andererseits jedoch aufgrund der guten Dämpfungsmöglichkeit der Einheit gegenüber den anderen Komponenten verhindert, dass die Messwerterfassung und - auswertung durch die Schwingungen beeinträchtigt wird.

Eine besonders kompakte Bauweise und vorteilhafte Betriebsweise lässt sich erreichen, wenn der aus dem Gehäuse austretende Strahl und die gestreute oder zurückreflektierte Strahlung in einem gewissen Winkel zueinander und relativ zum Gehäuse angeordnet sind. So bilden der ein- und austretende Strahl nach dem Austritt aus dem Messfenster zueinander einen Winkel von etwa 10 bis 120°.

Die oben beschriebene Messanordnung eignet sich insbesondere für Trübungsmessungen in Abwässern, bei der die Sedimentation, d.h. Anlage von Sedimenten und Bildung von Biofilmen erheblich vermindert wird. Die Anordnung eignet sich jedoch für alle optischen Messungen in Fluiden wie z.B. Wassern oder Abwassern.

Die Erfindung wird nachfolgend beispielsweise anhand eines Ausführungsbeispiels in Verbindung mit der schematischen Zeichnung beschrieben. In dieser zeigen:

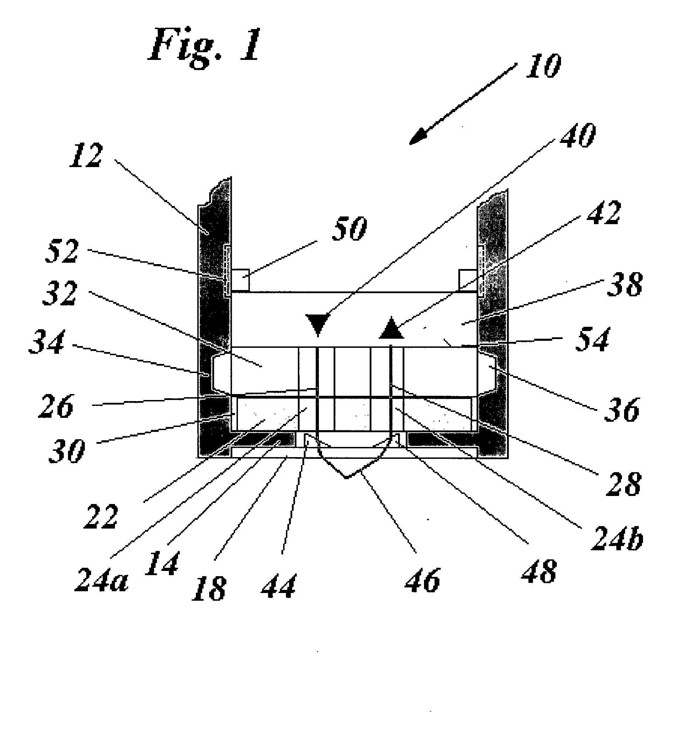

Fig. 1 einen vertikalen Schnitt durch eine erfindungsgemäße Messanordnung, und

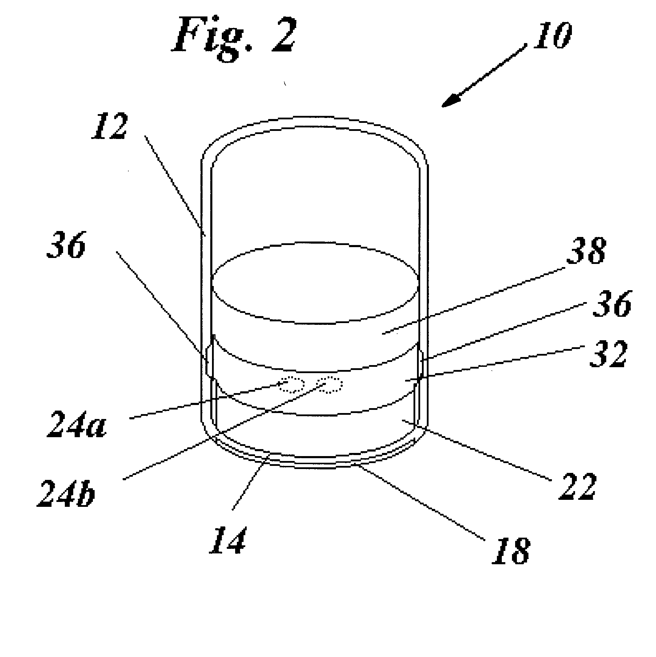

Fig. 2 eine nicht maßstabsgetreue perspektivische Ansicht der Messanordnung aus Figur 1.

Die Messanordnung 10 umfasst ein zylindrisches Gehäuse 12, an dessen Stirnseite ein als Membran ausgebildeter Boden 14 angeordnet ist, der in der Mitte eine Öffnung 16 aufweist. Am stirnseitigen Ende des Gehäuses 12 unter der Membran 14 ist ein Messfenster 18 angeordnet, das von dem Zylindermantel 20 des Gehäuses formschlüssig umgriffen wird. Dieser Formschluss kann durch Ausbildung von Nuten oder dergleichen im Umfang des Messfensters 18 verbessert werden. Das Messfenster 18 kann neben der formschlüssigen Verbindung mit dem Gehäuse 20 alternativ/außerdem mit der Membran 14 verklebt sein. Gehäuseinnenseitig ist auf der Membran 14 ein Schwingungserzeuger 22 in Form einer Scheibe aus Piezokeramik aufgebracht, z.B. geklebt, die innenseitig zwei Aussparungen 24 a, b für den Durchtritt eines austretenden Strahls 26 und eintretender Strahlung 28 aufweist. Der Schwingungserzeuger hat an seinen abgewandten Stirnseiten großflächige Elektroden, die sich insbesondere über die gesamte Stirnseite erstrecken. Im Umfangsbereich 30 des Schwingungserzeugers 22 ist ein Ringraum freigelassen, um die Dämpfung von Schwingungen unterschiedlicher Moden durch das Gehäuse zu unterbinden. Gehäuseinnenseitig schließt sich an den Schwingungserzeuger 22 eine zylinderförmige Dämmschicht 32 an, die Strahldurchführungen fluchtend zu den Strahldurchführungen 24 a, b des Schwingungserzeugers 22 aufweist. Im Umfangsbereich der Dämmschicht 32 und/oder des Schwingungserzeugers 22 ist die Gehäusewandung 34 durch das Vorsehen einer umlaufenden Ringnut 36 dickenreduziert. Die Dickenreduktion kann sich bis in den stirnseitigen Bereich des Gehäuses, d.h. bis in den Bereich der Aufhängung des Schwingungserzeugers erstrecken. Dies bewirkt eine akustische Entkopplung des stirnseitigen Bereichs des Gehäuses 12 von dem gehäuseinnenseitig angeordneten Sensor 38, der einen Strahlerzeuger 40 und einen Detektor 42 aufweist. Der aus dem Strahlerzeuger 40 austretende Strahl kann durch die Aussparungen 24 a in der Dämmschicht 32 und dem Schwingungserzeuger 22 zu einem ersten Umlenkelement 44 geführt werden, durch welches der Strahl zur Gehäusemitte hin umgelenkt wird. Die in das an der Unterseite des Messfensters 18 befindliche Medium eintretende Strahlung 46 wird im Medium gestreut oder reflektiert und tritt wiederum in das Messfenster 18 ein, gelangt in ein zweites Umlenkelement 48 und von dort aus in den Detektor 42 des Sensors 38. Der Sensor 38 ist an seiner Rückseite durch einen Ring 50 gehalten, der mit einem Innengewinde 52 in der Gehäusewandung 12 verschraubt wird. Vorzugsweise hat der Sensor 38 an seiner der Dämmlage 32 zugewandten Seite eine flächige Elektrode 54, die elektrisch mit der Gehäusewand 12 verbunden ist, so dass der Schwingungserzeuger 22 zwischen der flächigen Elektrode 54, der Gehäusewand 12 und der Membran 14 in einer Art Faradayschen Käfig gehalten ist, womit die Einstrahlung von elektrischer Störstrahlung in die Messelektronik des Sensors 38 vermieden wird. Das Gehäuse 12 besteht vorzugsweise aus nicht rostenden bzw. Edelmetallen wie z.B. Chromnickel, Chromvanadiumstähle als auch Aluminium, Titan etc.

Die rückseitigen Halterungen und Stromzuführungen zum Gehäuse sind aus Gründen der Übersichtlichkeit nicht dargestellt.

## Patentansprüche

1. Vorrichtung zur optischen Messung, insbesondere Trübungsmessung, in einem Medium, umfassend
- ein Gehäuse (12), insbesondere aus Metall,
- mindestens einen im Gehäuse (12) angeordneten Sensor (38) mit wenigstens einer Strahlungsquelle, die wenigstens einen optischen Strahl (26) in das zu untersuchende Medium abstrahlt , und mit wenigstens einem Detektor, der Streustrahlung (28) oder Reflektionen des Strahls in dem Medium empfängt,
- wenigstens ein optisch durchlässiges Element (18) in einer Gehäusewand zum Strahlaus/eintritt aus dem / in das Gehäuse, und
- wenigstens einen Schwingungserzeuger (22), der zumindest mit dem optisch durchlässigen Element (18) mechanisch gekoppelt ist,
wobei
a) der Schwingungserzeuger (22) zwischen dem Sensor (38) und dem optisch durchlässigen Element (18) angeordnet ist, und
b1) der Schwingungserzeuger (22) wenigstens eine Aussparung oder Durchführung(24a,b) zum Strahldurchtritt enthält und/oder
b2) der Strahl (26,28) zwischen Teilen des Schwingungserzeugers oder mehreren Schwingungserzeugern hindurch in das / aus dem Gehäuse (12) geführt ist.

2. Vorrichtung nach Anspruch 1,
die ein becherförmiges oder zylindrisches Metallgehäuse (12) aufweist, bei dem das optisch durchlässige Element (18) durch ein Messfenster gebildet ist, das an der Stirnseite des Bechers/Zylinders angeordnet ist.

3. Vorrichtung nach Anspruch 1 oder 2,
bei dem eine - insbesondere die vom Sensor wegweisende - elektrische Kontaktfläche des Schwingungserzeugers (22) mit dem Gehäuse (12) elektrisch verbunden ist.

4. Vorrichtung nach einem der vorhergehenden Ansprüche,
bei der der Schwingungserzeuger (22) als plattenförmige Piezokeramik ausgebildet ist, dessen Außenkontur in etwa der Außenkontur bzw. Innenkontur des Gehäuses (12) entspricht ,
die elektrischen Kontakte des Schwingungserzeugers (22) an den beiden abgewandten Plattenflächen angeordnet sind, und die Strahlführung in Art von Durchbohrungen (24a,b) oder Aussparungen in der Platte angeordnet sind.

5. Vorrichtung nach einem der vorhergehenden Ansprüche, bei der zwischen dem Sensor (38) und dem Schwingungserzeuger (22) und/oder zwischen dem Sensor und einem Bereich, z.B. einer Membran (14) zur Befestigung des Schwingungserzeugers die Stärke der Gehäusewand (34) reduziert ist und/oder ein im Frequenzbereich des Schwingungserzeugers (22) wirksames Dämpfungselement (32) angeordnet ist.

6. Vorrichtung nach einem der vorhergehenden Ansprüche, bei der der Schwingungserzeuger (22) in einem von dem Sensor (38) abgeschirmten Faradayschen Käfig liegt, der
- durch Gehäusewände und/oder
- flächige Anschlusselektroden (54) des Schwingungserzeugers (22) und /oder des Sensors (38) und/oder
- durch elektrisch leitende Zwischenböden (14) im Gehäuse (12) gebildet ist.

7. Vorrichtung nach einem der vorhergehenden Ansprüche, bei der das optisch durchlässige Element (18) auf einer zumindest im Strahlbereich mit Durchgängen versehenen Membran (14) angeordnet ist, die im Bereich einer Stirnseite des Gehäuses (12) ausgebildet und mechanisch fest mit dem Schwingungserzeuger (22) gekoppelt ist.

8. Vorrichtung nach einem der vorhergehenden Ansprüche, bei der ein aus dem Gehäuse (12) austretender Strahl und in das Gehäuse (12) eintretende Strahlung nach Durchtritt durch das durchlässige optische Element (18) in einem Winkel von 10 und 120° zueinander verlaufen, und bei der zwischen dem optisch durchlässigen Element (18) und dem Sensor (38) wenigstens ein optisches Umlenkelement (44,48) angeordnet ist.

9. Vorrichtung nach einem der vorhergehenden Ansprüche, bei der der Schwingungserzeuger (22) zur Erzeugung von Schwingungen im Ultraschallbereich ausgebildet ist.

10. Vorrichtung nach einem der vorhergehenden Ansprüche, bei der das optisch durchlässige Element (18) scheibenförmig ist und eine Stirnseite des Gehäuses (12) abschließt, und bei der die Scheibe (18) in ihrem Randbereich formschlüssig von dem Gehäuse (12) um- bzw. hintergriffen wird.
